# EUROPEAN PATENT SPECIFICATION

(11) **EP 3 566 803 B1**
(45) Date of publication and mention of the grant of the patent: **03.04.2024**
(21) Application number: 19172917.7
(22) Date of filing: 07.05.2019
(51) Int. Cl.: B23D 47/04, B25B 5/14, B25B 5/06, B25B 5/16, B25B 11/00, B23Q 3/00

(54) **METHOD AND MACHINE FOR CUTTING PANELS**
VERFAHREN UND VORRICHTUNG ZUM TRENNEN VON PLATTEN
PROCÉDÉ ET DISPOSITIF DE COUPE DE PLAQUES

(30) Priority: 08.05.2018 IT 201800005136
(43) Date of publication of application: 13.11.2019
(73) Proprietor: SCM Group S.p.A., 47921 Rimini (RN) (IT)
(72) Inventor: CERA, Simone, 47522 Cesena (FC) (IT); MANDOLESI, Stefano, 47921 Rimini (RN) (IT)
(74) Representative: Luppi Intellectual Property S.r.l.

(56) References cited:
- EP-A1- 1 784 291
- EP-A1- 2 127 829
- EP-A2- 2 105 232
- EP-B1- 1 784 291
- WO-A1-2008/038133

## Description

### Background of the invention

The present invention relates to a cutting method and a cutting machine, in particular for cutting panels, for example for panels that are fed intermittently along a (horizontal) feeding direction through a cutting station where the panels are cut along a (vertical) cutting plane that is transverse to the feeding direction.

Specifically, but not exclusively, the invention in question can be used to machine products (panels) made of wood, materials derived from wood or similar to wood.

In the wood panel machining industry, cutting machines with a horizontal support plane for the panel are known, with means for feeding the panel on the support plane in a feeding direction through a cutting station, with a pressing device that is movable between a lower position for clamping the panel in the cutting station and an upper release position, and with a cutting device that is movable transversely to the feeding direction.

Patent publication WO 2008/038133 A1 discloses a machine for cutting panels made of wood with pressing means for clamping the panel comprising a plurality of elements that are movable independently of one another between a raised position and a lowered position.

Patent publication EP 2233236 A1 discloses a method for cutting panels made of wood, in which a pressing device is lowered to a position for clamping the panel against a support plane, whilst a pneumatic thrust device exerts on the pressing device during the descent step an upward thrust that is not greater than the weight of the pressing device.

Patent publication IT 1395703 B1 discloses a panel cutting system comprising a pneumatic driving device that controls the descent of a pressing device and a mechanical stop device that stops the pressing device during descent thereof to a lowered position for clamping the panel against a support plane, in which the mechanical stop device is distinct from the pneumatic driving device.

### EP 1784291 A1 discloses a cutting machine as in the preamble of claim 1.

### Summary of the invention

One object of the invention is to provide a solution for cutting panels that is alternative to the aforementioned prior art.

One advantage is to permit precise control of the clamping force exerted by the pressing device on the panel being machined.

One advantage is to reduce the risk that the pressing device may damage the panel, also in the case of a fragile and delicate panel.

One advantage is to make available an adaptable and versatile solution that is able to permit precise control of the clamping force also for different types of panel, whatever the dimension and/or the material of the panel.

One advantage is to provide a cutting machine for cutting panels that is constructionally simple and cheap.

Such objects and advantages, and still others, are reached by a machine comprising the combination of features of appended claim 1 and a method comprising the combination of features of appended claim 6.

In one embodiment, a method for cutting panels comprises the steps of raising a pressing device as far as a raised position and then to lower the pressing device as far as a lowered position for clamping the panels against a support plane, in which the raised position is reached by a first raising caused by the first actuating means that are fixed with respect to the support plane and connected to an intermediate portion, and a second raising caused by second actuating means that is carried by the pressing device and raises the pressing device with respect to the intermediate portion, and in which the lowered position is reached at the end of a descent stroke of at least one movable element of the first actuating means.

In one embodiment, a machine for cutting panels comprises a frame defining at least one support plane for the panels, means for feeding the panels onto the support plane in a feeding direction, a cutting device for cutting the panels according to a cutting plane that is transverse to the feeding direction, a pressing device that is movable vertically for clamping the panels against the support plane, first actuating means that is fixed to the frame and is provided with at least one movable driving element for raising and lowering the pressing device, and second actuating means that is carried by the pressing device and is configured to drive at least one corresponding movement of the pressing device with respect to the drive element of the first actuating means.

The cutting machine may comprise, in particular, an intermediate portion that is integrally movable with the drive element and connected with the pressing device so as to permit controlled movement of the pressing device with respect to the intermediate portion.

The intermediate portion may comprise, in particular, at least one portion (slide) that is slidable on guide means that is fixed with respect to support plane.

The second actuating means may comprise, in particular, at least one translating device fixed to the pressing device and configured so as to translate the pressing device with respect to the intermediate portion.

The second actuating means may comprise, in particular, actuating means of electric type. The first actuating means may comprise, in particular, actuating means of pneumatic type.

The method provides controlling the first actuating means and the second actuating means so as to perform material clamping procedure that comprises the steps of receiving information on the panels (in particular on the thickness of the panels), lifting the pressing device by a height difference, determined on the basis of the aforesaid information, as far as the raised position, by at least one drive of the first actuating means to perform a movement of the movable driving element and at least one drive of the second actuating means to perform a movement of the pressing device with respect to the drive element of the first actuating means.

During lowering of the pressing device from the raised position to the lowered clamping position, the movable driving element lowers in a manner that is integral with the pressing device (without a corresponding movement between the pressing device and the drive element), until the end of the descent movement of the drive element, defining the lowered clamping position.

### Brief description of the drawings

The invention can be better understood and implemented with reference to the attached drawings that illustrate one embodiment thereof by way of non-limiting example, in which:

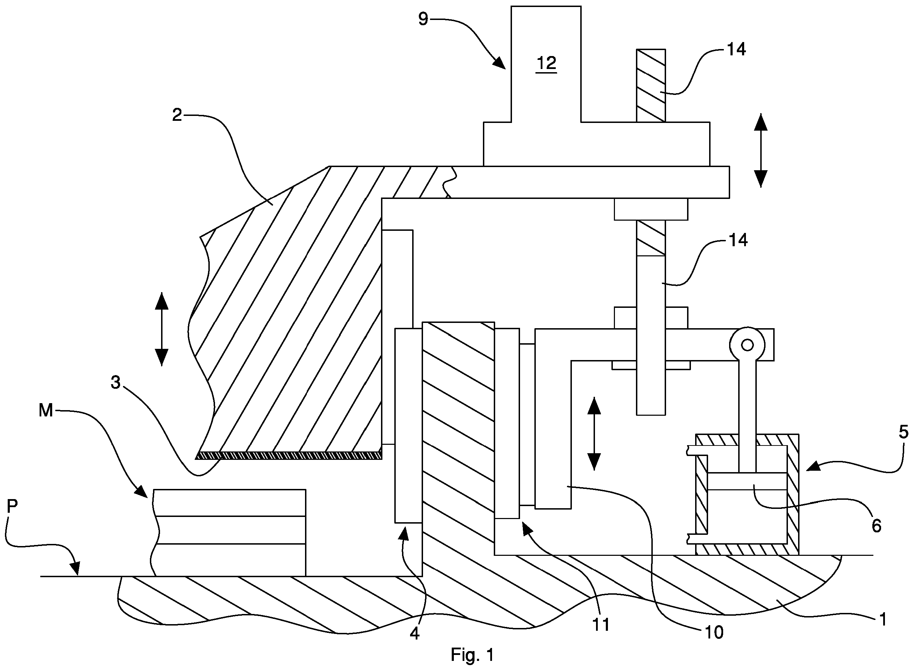

Figure 1 shows a sectioned schematic view, in a vertical elevation, of a portion of a cutting station of a machine for cutting panels made according to the present invention.

### Detailed description

With reference to the aforesaid Figure 1, which shows schematically and partially a cutting station of a cutting machine (or cutting machines) for cutting panels, the figure plane includes a vertical plane that is orthogonal to a feeding direction of the material M being machined that advances (intermittently) on a (horizontal) support plane P. The cutting machine is used in particular, for cutting panels with a substantially parallelpipedon shape with a substantially rectangular section. The material M being machined (panels) may be made, in particular, of wood, materials derived from wood or similar to wood. Figure 1 shows an end zone on one side of the cutting station. The cutting station may comprise, in particular, an end zone on the opposite side that is substantially identical to the end zone illustrated schematically in Figure 1.

The cutting machine comprises a frame 1 that may comprise, in particular, a base that extends in length in a longitudinal direction (substantially horizontal and parallel to the aforesaid feeding direction of the material M being machined). The frame 1 defines the horizontal support plane P configured for receiving the material M to be machined, for example a pack of superimposed panels.

The cutting machine comprises feeding means (not shown, for example a panel feeding device of known type) configured to feed the material M to be machined (pack of panels) along the base in the aforesaid longitudinal direction (feeding direction). In use, it is possible to provide for the material M to be machined being fed by the feeding means (panel advancing device) through the cutting station that is provided with a cutting device (which is not illustrated, for example of known type). The cutting device may comprise, in particular, a cutting blade (for example of the saw type) that is movable in a (substantially horizontal) cutting direction that is transverse to the aforesaid (panel feeding) longitudinal direction. The cutting device is configured, in particular, to section the material M along a cutting plane that may be, in particular, substantially orthogonal to the aforesaid longitudinal direction (feeding direction of the material M being machined).

At the cutting station, the material M (pack of panels) is locked against the support plane P by a pressing device 2 that can press the material M downwards with a clamping force. The pressing device 2 may comprise, in particular, at least one pressure bar that may extend above the support plane P in the aforesaid cutting direction. The pressing device 2 may comprise, in particular, at least one pair of pressure bars arranged on opposite sides of the aforesaid cutting plane. Each pressure bar may be provided with a strip 3 made of elastically deformable material (for example a strip fixed to a lower end of the respective bar).

The pressing device 2 (in particular each pressure bar) is vertically slidably coupled to the frame 1. In particular, the pressing device 2 is coupled with the frame 1 by first guide means 4 that is fixed to the frame 1 and may comprise, for example, at least one (vertical) linear sliding guide.

The pressing device 2 is movable in the aforesaid vertical movement direction at least through the effect of the action of actuating means 5 that may comprise, in particular, at least one actuator or at least two actuators fixed to the frame 1 and arranged on opposite sides of the base and spaced apart from one another in the aforesaid cutting direction. In Figure 1, where the end zone is shown, at one of the two sides of the cutting station, only one actuator is visible. Each actuator may comprise, in particular, one linear actuator that is parallel to the aforesaid vertical movement direction. Each actuator may comprise, in particular, one (linear) actuator of pneumatic type.

Each actuator comprises, in particular, at least one (vertically) movable element 6 that is movable with respect to the support plane P. Each movable element 6 is connected to the pressing device 2 so as to drive a vertical movement of the pressing device 2 with respect to the support plane P, as will be explained better below.

The cutting machine comprises at least one driving device 9 carried by the pressing device 2 and configured to drive a (vertical) movement of the pressing device 2 with respect to the movable element 6 of the actuating means 5. It is possible to provide for arranging two driving devices 9, one for each of the two opposite sides of the cutting station.

The cutting machine comprises at least one intermediate portion 10 that is vertically movable with respect to the support plane P. It is possible to provide for arranging two intermediate portions 10, one for each of the two opposite sides of the cutting station. Each intermediate portion 10 is connected to a respective movable element 6. Each intermediate portion 10 is connected to the pressing device 2 so that the pressing device 2 can perform vertical movements with respect to the intermediate portion 10 driven by the respective driving device 9.

Each intermediate portion 10 is vertically slidably coupled to said frame 1. Each intermediate portion 10 may be, in particular, coupled with second guide means 11 fixed to the frame 1, comprising, for example, at least one linear (vertical) sliding guide.

Each driving device 9 may comprise, in particular, at least one translating device carried by the pressing device 2 and coupled with the intermediate portion 10. In particular, the driving device 9 may comprise at least one electrically driven translating device. The translating device may be, for example, of the screw and nut screw type. The translating device may comprise, in particular, motor means 12, at least one nut screw rotated (around a vertical rotation axis) by motor means 12, at least one threaded rod 14 rotated by the nut screw.

In other embodiments, the translating device may be of another type, for example of the rack and pinion type.

The translating device may be coupled with the intermediate portion 10 so as to command movements (with at least one component in a vertical direction) of the intermediate portion 10 with respect to the pressing device 2. In particular, the threaded rod 14 (or, in other embodiments, a rack) may have an end coupled with the pressing device 2 and another end coupled with the intermediate portion 10. The translating device may further comprise a mechanism (in particular of known type, for example a mechanism of the type usable for an operating screw) so configured that the helical coupling between the thread of the rod 14 and the thread of the nut screw rotated by the motor means 12 enables the rod 14 to rotate (which is prevented from translating) and causes the (vertical) translation of the pressing device 2 (prevented from rotating). The rotating rod 14 may be connected to the intermediate portion 10 so as to prevent rotation and command translation thereof.

The cutting machine comprises, preferably programmable, electronic control means (for example an electronic processor) configured to control the actuating means 5 and the driving device 9 so as to perform a clamping procedure on the material M being machined.

The clamping procedure comprises the step of receiving information on the material M to be machined. This information comprises at least one thickness of the material M (pack of panels). The information may comprise, in particular, the type of material of which the panels are made, to take for the greater or lesser toughness of the panels being machined into account. The information may be entered in the electronic memory of the control means, for example, by an operator, by a user interface and/or by reading a code assigned to the product to be machined.

The clamping procedure comprises the step of lifting the pressing device 2 by a height difference determined on the basis of the aforesaid information, as far as a raised position. This lifting is performed by at least one drive of the actuating means 5, to cause a first movement (such as to cause a height difference H1) of the movable elements 6 of the actuating means 5, and at least one drive of the driving device 9, to cause a second movement (such as to cause a height difference H2, that has an adjusting height difference, which can be positive or negative) of the pressing device 2 with respect to the movable elements 6. The clamping procedure comprises the step of lowering the pressing device 2 from the raised position (whilst the movable elements 6 will be lowered integrally with the pressing device 2, without corresponding movements between the pressing device 2 and the movable elements 6, i.e. without driving the driving devices 9) until each movable element 6 stops, reaching a configuration in which the pressing device 2 is in a lowered clamping position of the material M against the support plane P (with the material M in contact with the strip 3 made of deformable material).

The amount of height difference H2 (adjusting height difference) may be adjusted according to the thickness and/or type of the material M, to obtain during the lifting step the height difference H = H1 + H2, which is determined so that in the subsequent lowered position of the pressing device 2, i.e. at the end of the lowering movement, the clamping force on the material M is the force desired to ensure locking during cutting without damaging the material M.

During the lifting step, the overall height difference H of the pressing device 2, from an initial position (considered as the zero position) to the raised position, from which the lowering stroke will start, may be equal to the sum of the height differences H1 and H2, which are determined, respectively, by the actuating means 5 and by the driving device 9. It is possible to provide, as an example, for the height difference H1 (achieved by the actuating means 5 of pneumatic type) being substantially the same for each clamping procedure and the height difference H2 (achieved by the driving devices 9 of electric type with operating screw or with rack) being the adjusting height difference that can be varied to allow for the features of the material that is fed each time to the cutting station, so as to reach, at the end of the pressing device 2 lowering stroke, the desired lowered clamping position. In practice, the height difference H1 may be, for example, a known value corresponding in particular to a (maximum) stroke that the movable element 6 can perform between a minimum height and a maximum height.

With the operation of the cutting machine, it is possible to actuate a cutting method that comprises the following operating steps.

The method comprises the step of arranging the material to be machined, comprising in particular at least one panel, on the support plane.

The method comprises the step of receiving information on the material to be machined. This information comprises at least one thickness of the material.

The method comprises the step of raising the pressing device by a height difference H = H1 + H2 determined on the basis of the aforesaid information as far as a raised position, by a combined movement that includes at least one first vertical movement of the movable element 6 of the actuating means 5 connected to the pressing device 2 (so as to determine a known height difference H1, for example fixed) and at least one second vertical movement of the pressing device 2 with respect to the movable element 6 (so as to determine a height difference H2, which may be, for example, positive, or negative or nil, and adjustable according to the features of the material M).

The method comprises the step of lowering the pressing device 2 from the aforesaid raised position as far as the lowered work position (in which it presses the material M with a clamping force against the support plane P), whilst simultaneously the movable element 6 is lowered integrally with the pressing device 2 as far as the end of the stroke thereof, defining the position for clamping.

The method comprises the step of cutting the material.

During the aforesaid step of lowering the pressing device 2 as far as the position for clamping, it is possible to provide for the (pneumatic) actuating means 5 being driven so as to exert a downward thrust on the movable element 6 and thus on the pressing device 2.

The aforesaid vertical movement of the pressing device 2 with respect to the movable element 6 (so as to determine the adjusting height difference H2) is driven by the driving device 9 in particular by a device (for example translator) arranged between the pressing device 2 and the movable element 6.

It is observed that during the aforesaid step of lowering the pressing device 2 as far as the position for clamping, the descent of the pressing device 2 may be countered by the reaction caused by the dissipation, by fluid dynamic friction, due to the operating fluid that exits from the lower chamber of the pneumatic actuating means 5.

## Claims

1. Cutting machine, in particular for panels made of wood, materials derived from wood or similar to wood, said machine comprising:
- a frame (1) which defines at least one horizontal support plane (P) for receiving material (M) to be processed;
- feeding means for feeding the material (M) on said support plane (P) in a feeding direction;
- a cutting device configured to cut the material arranged on said support plane (P) according to at least one cutting plane that is transverse to said feeding direction;
- a pressing device (2) for clamping the material (M) against said support plane (P), said pressing device (2) being vertically movable with respect to said support plane (P);
- actuating means (5) fixed to said frame (1), said actuating means (5) comprising at least one movable element (6) that is movable with respect to said support plane (P), said movable element (6) being connected to said pressing device (2) so as to actuate a movement of said pressing device (2) with respect to said support plane (P);
- at least one driving device (9) carried by said pressing device (2) and configured to drive at least one relative movement of said pressing device (2) with respect to said movable element (6);
- **an intermediate portion (10) that is vertically movable with respect to said support plane (P) and is connected to said movable element (6), said intermediate portion (10) being connected to said pressing device (2) so that said driving device (9) is able to drive vertical displacements of said pressing device (2) with respect to said intermediate portion (10), said intermediate portion (10) being vertically slidably coupled to said frame (1);**
- electronic control means configured to control said actuating means (5) and said driving device (9) so as to perform a clamping procedure of the material **characterized in that said pressing device (2) is vertically slidably coupled to said frame (1) and in that said clamping procedure** comprises the following steps:
* receiving information relating to the material (M) to be processed, said information comprising at least one thickness of the material (M);
* raising said pressing device (2) of a height difference (H) determined on the basis of said information, up to a raised position, by at least one actuation of said actuating means (5) to perform a movement of said movable element (6) and at least one actuation of said driving device (9) to perform a movement of said pressing device (2) with respect to said movable element (6);
* lowering said pressing device (2) from said raised position while said movable element (6) is lowered together with said pressing device (2) reaching a configuration in which said pressing device (2) is in a lowered position for clamping the material (M) against said support plane (P).

2. Machine according to claim 3 **1,** wherein said driving device (9) comprises at least one translating device carried by said pressing device (2) and coupled with said intermediate portion (10).

3. Machine according to any one of the preceding claims, wherein said driving device (9) comprises at least one electrically operated translating device.

4. Machine according to claim **3,** wherein said translating device is of the screw- type or of the pinion and rack type.

5. Machine according to any one of the preceding claims, wherein said actuating means (5) comprises at least one pneumatic linear actuator.

6. Cutting method **performed by a machine according to any one of the preceding claims,** comprising the steps of:
- arranging material (M) to be machined, comprising in particular at least one panel, on a support plane (P);
- receiving information relating to said material (M) to be machined, said information comprising at least one thickness of said material (M);
- raising a pressing device (2) of a height difference (H) determined on the basis of said information up to a raised position, by at least one first vertical movement of at least one movable element (6) of actuating means (5) that is connected to said pressing device (2) and at least one second vertical movement of said pressing device (2) with respect to said movable element (6);
- lowering said pressing device (2) from said raised position to a lowered position while said movable element (6) is lowered together with said pressing device (2), in said lowered position said material (M) being clamped by said pressing device (2) against said supporting plane (P);
- cutting said material (M).

7. Method according to claim **6,** wherein, during said lowering step, said actuating means (5) is actuated so as to exert a downward thrust on said movable element (6).

8. Method according to claim **6 or 7,** wherein said second vertical movement of said pressing device (2) with respect to said movable element (6) is driven by said driving device (9), for example a translating device, that is arranged between said pressing device (2) and said movable element (6).

## Patentansprüche

1. Schneidemaschine, insbesondere für Platten aus Holz, Holzwerkstoffen oder holzähnlichen Materialien, umfassend:
- einen Rahmen (1), der zumindest eine horizontale Auflageebene (P) zur Aufnahme des zu bearbeitenden Materials (M) definiert;
- Zuführmittel zum Zuführen des Materials (M) auf der Auflageebene (P) in einer Zuführrichtung;
- eine Schneidvorrichtung, die so eingerichtet ist, dass sie das auf der Auflageebene (P) angeordnete Material in mindestens einer Schnittebene, die quer zur Zuführrichtung verläuft, schneidet;
- eine Pressvorrichtung (2) zum Festklemmen des Materials (M) gegen die Auflageebene (P), wobei die Pressvorrichtung (2) in Bezug auf die Auflageebene (P) vertikal beweglich ist;
- ein Betätigungsmittel (5), das an dem Rahmen (1) befestigt ist, wobei das Betätigungsmittel (5) mindestens ein bewegliches Element (6) umfasst, das in Bezug auf die Auflageebene (P) beweglich ist, wobei das bewegliche Element (6) mit der Pressvorrichtung (2) verbunden ist, um eine Bewegung der Pressvorrichtung (2) in Bezug auf die Auflageebene (P) zu bewirken;
- mindestens eine Antriebsvorrichtung (9), die von der Pressvorrichtung (2) getragen wird und so eingerichtet ist, dass sie mindestens eine Relativbewegung der Pressvorrichtung (2) in Bezug auf das bewegliche Element (6) bewirkt;
- einen Zwischenabschnitt (10), der in Bezug auf die Auflageebene (P) vertikal beweglich und mit dem beweglichen Element (6) verbunden ist, wobei der Zwischenabschnitt (10) mit der Pressvorrichtung (2) verbunden ist, so dass die Antriebsvorrichtung (9) in der Lage ist, vertikale Verschiebungen der Pressvorrichtung (2) in Bezug auf den Zwischenabschnitt (10), der vertikal verschiebbar mit dem Rahmen (1) verbunden ist, anzutreiben;
- ein elektronisches Steuermittel, das so eingerichtet ist, dass es das Betätigungsmittel (5) und die Antriebsvorrichtung (9) so steuert, dass es einen Klemmvorgang des Materials (M) durchführt;
**dadurch gekennzeichnet, dass** die Pressvorrichtung (2) vertikal verschiebbar mit dem Rahmen (1) verbunden ist und dass der Klemmvorgang die folgenden Schritte umfasst:
* Empfangen von Informationen über das zu bearbeitende Material (M), wobei diese Informationen mindestens eine Dicke des Materials (M) umfassen;
* Anheben der Pressvorrichtung (2) um eine auf der Grundlage der Informationen bestimmte Höhendifferenz (H) bis zu einer angehobenen Position durch mindestens eine Betätigung des Betätigungsmittels (5), um eine Bewegung des beweglichen Elements (6) durchzuführen, und mindestens eine Betätigung der Antriebsvorrichtung (9), um eine Bewegung der Pressvorrichtung (2) in Bezug auf das bewegliche Element (6) durchzuführen;
* Absenken der Pressvorrichtung (2) aus der angehobenen Position, während das bewegliche Element (6) zusammen mit der Pressvorrichtung (2) abgesenkt wird und eine Konfiguration erreicht, in der sich die Pressvorrichtung (2) in einer abgesenkten Position befindet, um das Material (M) gegen die Auflageebene (P) zu klemmen.

2. Maschine nach Anspruch 1, **dadurch gekennzeichnet, dass** die Antriebsvorrichtung (9) mindestens eine von der Pressvorrichtung (2) getragene und mit dem Zwischenabschnitt (10) gekoppelte Verschiebevorrichtung umfasst.

3. Maschine nach einem der vorhergehenden Ansprüche, wobei die Antriebsvorrichtung (9) mindestens eine elektrisch betriebene Verschiebevorrichtung umfasst.

4. Maschine nach Anspruch 3, **dadurch gekennzeichnet, dass** die Verschiebevorrichtung vom Schraubentyp oder vom Ritzel- und Zahnstangentyp ist.

5. Maschine nach einem der vorhergehenden Ansprüche, wobei die Betätigungsvorrichtung (5) mindestens einen pneumatischen Linearantrieb umfasst.

6. Schneidverfahren, das von einer Maschine nach einem der vorhergehenden Ansprüche durchgeführt wird, umfassend folgende Schritte:
- Anordnen des zu bearbeitenden Materials (M), das insbesondere mindestens eine Platte umfasst, auf einer Auflageebene (P);
- Empfangen von Informationen, die sich auf das zu bearbeitende Material (M) beziehen, wobei diese Informationen mindestens eine Dicke des Materials (M) umfassen;
- Anheben einer Pressvorrichtung (2) mit einem Höhenunterschied (H), der auf der Grundlage der Informationen bestimmt wird, in eine angehobene Position durch mindestens eine erste vertikale Bewegung von mindestens einem beweglichen Element (6) von einem Betätigungsmittel (5), das mit der Pressvorrichtung (2) verbunden ist, und mindestens eine zweite vertikale Bewegung der Pressvorrichtung (2) in Bezug auf das bewegliche Element (6);
- Absenken der Pressvorrichtung (2) aus der angehobenen Position in eine abgesenkte Position, während das bewegliche Element (6) zusammen mit der Pressvorrichtung (2) abgesenkt wird, wobei in der abgesenkten Position das Material (M) durch die Pressvorrichtung (2) gegen die Auflageebene (P) geklemmt wird;
- Schneiden des Materials (M).

7. Verfahren nach Anspruch 6, bei dem während des Absenkens das Betätigungsmittel (5) so betätigt wird, dass es einen Abwärtsschub auf das bewegliche Element (6) ausübt.

8. Verfahren nach Anspruch 6 oder 7, wobei die zweite vertikale Bewegung der Pressvorrichtung (2) in Bezug auf das bewegliche Element (6) durch die Antriebsvorrichtung (9), z.B. eine Verschiebevorrichtung, die zwischen der Pressvorrichtung (2) und dem beweglichen Element (6) angeordnet ist, angetrieben wird.

## Revendications

1. Machine à découper, en particulier pour panneaux en bois, matériaux dérivés du bois ou similaires au bois, ladite machine comprenant:
- un châssis (1) qui définit au moins un plan de support horizontal (P) pour recevoir du matériau (M) à transformer;
- un moyen d'alimentation pour acheminer le matériau (M) sur ledit plan de support (P) dans une direction d'alimentation;
- un dispositif de découpe configuré pour découper le matériau agencé sur ledit plan de support (P) selon au moins un plan de découpe qui est transversal à ladite direction d'alimentation;
- un dispositif de pressage (2) pour serrer le matériau (M) contre ledit plan de support (P), ledit dispositif de pressage (2) étant mobile verticalement par rapport audit plan de support (P);
- un moyen d'actionnement (5) fixé audit châssis (1), ledit moyen d'actionnement (5) comprenant au moins un élément mobile (6) qui est mobile par rapport audit plan de support (P), ledit élément mobile (6) étant relié audit dispositif de pressage (2) de manière à actionner un déplacement dudit dispositif de pressage (2) par rapport audit plan de support (P);
- au moins un dispositif d'entraînement (9) porté par ledit dispositif de pressage (2) et configuré pour entraîner au moins un déplacement relatif dudit dispositif de pressage (2) par rapport audit élément mobile (6);
- une partie intermédiaire (10) qui est mobile verticalement par rapport audit plan de support (P) et est reliée audit élément mobile (6), ladite partie intermédiaire (10) étant reliée audit dispositif de pressage (2) de telle sorte que ledit dispositif d'entraînement (9) soit apte à entraîner des déplacements verticaux dudit dispositif de pressage (2) par rapport à ladite partie intermédiaire (10), ladite partie intermédiaire (10) étant couplée de manière verticalement coulissante audit châssis (1);
- un moyen de commande électronique configuré pour commander ledit moyen d'actionnement (5) et ledit dispositif d'entraînement (9) de manière à réaliser une procédure de serrage du matériau (M);
**caractérisée en ce que** ledit dispositif de pressage (2) est couplé de manière verticalement coulissante audit châssis (1) et **en ce que** ladite procédure de serrage comprend les étapes suivantes:
* recevoir des informations concernant le matériau (M) à transformer, lesdites informations comprenant au moins une épaisseur du matériau (M);
* surélever le dispositif de pressage (2) d'une différence de hauteur (H) déterminée sur la base desdites informations, jusqu'à une position surélevée, par au moins un actionnement dudit moyen d'actionnement (5) pour réaliser un déplacement dudit élément mobile (6) et au moins un actionnement dudit dispositif d'entraînement (9) pour réaliser un déplacement dudit dispositif de pressage (2) par rapport audit élément mobile (6);
* abaisser ledit dispositif de pressage (2) depuis ladite position surélevée alors que ledit élément mobile (6) est abaissé avec ledit dispositif de pressage (2) atteignant une configuration dans laquelle ledit dispositif de pressage (2) est dans une position abaissée pour serrer le matériau (M) contre ledit plan de support (P).

2. Machine selon la revendication 1, dans laquelle ledit dispositif d'entraînement (9) comprend au moins un dispositif de translation porté par ledit dispositif de pressage (2) et couplé à ladite partie intermédiaire (10).

3. Machine selon l'une des revendications précédentes, dans laquelle ledit dispositif d'entraînement (9) comprend au moins un dispositif de translation actionné électriquement.

4. Machine selon la revendication 3, dans laquelle ledit dispositif de translation est du type à vis ou du type à crémaillère.

5. Machine selon l'une des revendications, dans laquelle ledit moyen d'actionnement (5) comprend au moins un actionneur pneumatique linéaire.

6. Procédé de découpe réalisé par une machine selon l'une des revendications précédentes, comprenant les étapes:
- agencer du matériau (M) à usiner, comprenant en particulier au moins un panneau, sur un plan de support (P);
recevoir des informations concernant ledit matériau (M) à usiner, lesdites informations comprenant au moins une épaisseur dudit matériau (M);
surélever un dispositif de pressage (2) d'une différence de hauteur (H) déterminée sur la base desdites informations jusqu'à une position surélevée, par au moins un premier déplacement vertical d'au moins un élément mobile (6) de moyen d'actionnement (5) qui est relié audit dispositif de pressage (2) et au moins un deuxième déplacement vertical dudit dispositif de pressage (2) par rapport audit élément mobile (6);
abaisser ledit dispositif de pressage (2) depuis ladite position surélevée jusqu'à une position abaissée alors que ledit élément mobile (6) est abaissé avec ledit dispositif de pressage (2), dans ladite position abaissée ledit matériau (M) étant serré par ledit dispositif de pressage (2) contre ledit plan de support (P);
- découper ledit matériau (M).

7. Procédé selon la revendication 6, dans lequel, durant ladite étape d'abaissement, ledit moyen d'actionnement (5) est actionné de manière à exercer une poussée descendante sur ledit élément mobile (6).

8. Procédé selon la revendication 6 ou 7, dans lequel ledit deuxième déplacement vertical dudit dispositif de pressage (2) par rapport audit élément mobile (6) est entraîné par ledit dispositif d'entraînement (9), par exemple un dispositif de translation, qui est agencé entre ledit dispositif de pressage (2) et ledit dispositif mobile (6).
